# EUROPEAN PATENT APPLICATION

(11) **EP 4 620 863 A1**
(43) Date of publication of application: **24.09.2025**
(21) Application number: 23894216.3
(22) Date of filing: 29.08.2023
(51) Int. Cl.: B65G 1/04

(54) **ARTICLE TRANSPORT FACILITY**

(30) Priority: 22.11.2022 JP 2022186462
(71) Applicant: Daifuku Co., Ltd., Osaka-shi, Osaka 555-0012 (JP)
(72) Inventor: MISHINA Yasuhisa, Gamo-gun Shiga 529-1692 (JP); GONDOH Takuya, Tokyo 105-0022 (JP); MIYAMOTO Masaya, Tokyo 105-0022 (JP); IWATA Masashige, Gamo-gun, Shiga 529-1692 (JP)
(74) Representative: Grosse Schumacher Knauer von Hirschhausen
(86) International application number: PCT/JP2023/031175
(87) International publication number: WO 2024/111200

(57) **Abstract**

A transfer device (30) provided for an article transport facility (10) including a main power supply (51) and an auxiliary power supply (52) includes a control device (60) configured to control a driving device (35) configured to advance and retract movable members (31). In a case where the transfer device (30) is performing a scooping-up projection operation to project the movable members (31) from a reference position (P1) corresponding to a support (11) to a projection target position (P2) corresponding to a transfer target area (22) to move an article (W) in the transfer target area (22) to the support (11) at stop of power supply from the main power supply (51) to the transfer device (30), the control device (60) performs a power-outage scooping-up discontinuance operation (M1c) to project the movable members (31) to the projection target position (P2) and then retract the movable members (31) to the reference position (P1) with the movable members (31) holding no article (W).

## Description

### Technical Field

The present invention relates to an article transport facility including a transfer device.

### Background Art

An article transport facility including a transfer device including a pair of movable members configured to advance and retract in a transfer direction has been known. Hereinafter, reference signs described within parentheses in the description of the Background Art are reference signs used in Japanese Unexamined Patent Application Publication No. 2022-079780 (Patent Literature 1). Patent Literature 1 discloses an article transport facility (1) including a transfer device (7) including a pair of movable members (21, 22) configured to advance and retract in a transfer direction of a support (23).

### Citation List

### Patent Literature

Patent Literature 1: Japanese Unexamined Patent Application Publication No. 2022-079780

### Summary of Invention

### Technical Problem

In Patent Literature 1, for example, in response to stop of power supply from a main power supply to the transfer device due to power outage of a commercial power supply, malfunction of the main power supply, or the like, the pair of movable members may stop in the middle of a transfer operation to move an article along the transfer direction. In this case, it is not preferable that the pair of movable members stop while the pair of movable members project toward a transfer target area, because the pair of movable members thus projecting might make contact with other equipment such as a shelf in a restoration operation after the power supply is restored.

In view of this, it is desired to achieve an article transport facility that can reduce the possibility that a pair of movable members stop while the pair of movable members are kept projecting toward a transfer target area, even in a case where power supply from a main power supply to a transfer device stops.

### Solution to Problem

An article transport facility according to this disclosure is an article transport facility including: a support configured to support an article; a transfer device configured to perform a transfer operation to move the article along a transfer direction between the support and a transfer target area; and a power supply device configured to supply electric power to the transfer device. The transfer device includes: a pair of movable members disposed on respective opposite sides across the article in a width direction and which are configured to advance and retract in the transfer direction, the width direction being a direction perpendicular to the transfer direction as viewed vertically; a driving device configured to advance and retract the pair of movable members; and a control device configured to control the driving device. The power supply device includes: a main power supply configured to receive electric power from a commercial power supply and supply the electric power to the transfer device; and an auxiliary power supply configured to temporarily supply electric power to the transfer device in case of stop of power supply from the main power supply to the transfer device. In a case where the transfer device is performing a scooping-up projection operation to project the pair of movable members from a reference position corresponding to the support to a projection target position corresponding to the transfer target area to move the article in the transfer target area to the support at the stop of power supply from the main power supply to the transfer device, the control device performs a power-outage scooping-up discontinuance operation to project the pair of movable members to the projection target position and then retract the pair of movable members to the reference position with the pair of movable members holding no article.

With this configuration, even in a case where power supply from the main power supply to the transfer device stops due to power outage of a commercial power supply, malfunction of the main power supply, or the like in the middle of the scooping-up projection operation, for example, it is possible to reduce the possibility that the pair of movable members stop with the pair of movable members projecting toward the transfer target area. Accordingly, it is possible to reduce such a possibility that the transfer device moves with the pair of movable member projecting in response to restoration of the main power supply, and the transfer device makes contact with other equipment, for example. Besides, even in a case where the power-outage scooping-up discontinuance operation is performed, the pair of movable members can operate in the transfer direction in the same manner as an operation performed at normal time, thereby making it possible to simplify a control process by the control device. In addition, since the pair of movable members retract to the reference position without holding the article in the power-outage scooping-up discontinuance operation, it is possible to restrain power consumption of the auxiliary power supply.

Further features and advantages of the technology according to this disclosure will become clearer by the following illustrative and nonlimiting description of embodiments to be described with reference to the drawings.

### Brief Description of Drawings

Fig. 1 is a perspective view of an article transport facility;
Fig. 2 is a perspective view of a transfer device in Fig. 1;
Fig. 3 is a control block diagram of the transfer device in Fig. 2;
Fig. 4 is a view illustrating the transfer device in Fig. 2 before starting a scooping-up projection operation;
Fig. 5 is a view illustrating the transfer device in Fig. 2 in the middle of the scooping-up projection operation;
Fig. 6 is a view illustrating the transfer device in Fig. 2 before completing the scooping-up projection operation;
Fig. 7 is a view illustrating the transfer device in Fig. 2 that has completed the scooping-up projection operation;
Fig. 8 is a schematic view illustrating the transfer device in Fig. 2 in the middle of a scooping-up retraction operation;
Fig. 9 is a schematic view illustrating the transfer device in Fig. 2 that has completed the scooping-up retraction operation;
Fig. 10 is a view illustrating a power-outage scooping-up discontinuance operation by the transfer device in Fig. 2;
Fig. 11 is a view illustrating a power-outage scooping-up continuance operation by the transfer device in Fig. 2;
Fig. 12 is a view illustrating the transfer device in Fig. 2 before starting an unloading projection operation;
Fig. 13 is a view illustrating the transfer device in Fig. 2 in the middle of the unloading projection operation;
Fig. 14 is a view illustrating the transfer device in Fig. 2 before starting an unloading retraction operation;
Fig. 15 is a view illustrating the transfer device in Fig. 2 in the middle of the unloading retraction operation;
Fig. 16 is a schematic view illustrating the transfer device in Fig. 2 that has completed the unloading retraction operation;
Fig. 17 is a view illustrating a power-outage first unloading operation by the transfer device in Fig. 2; and
Fig. 18 is a view illustrating a power-outage second unloading operation by the transfer device in Fig. 2.

### Description of Embodiments

An embodiment of an article transport facility will be described below with reference to the drawings.

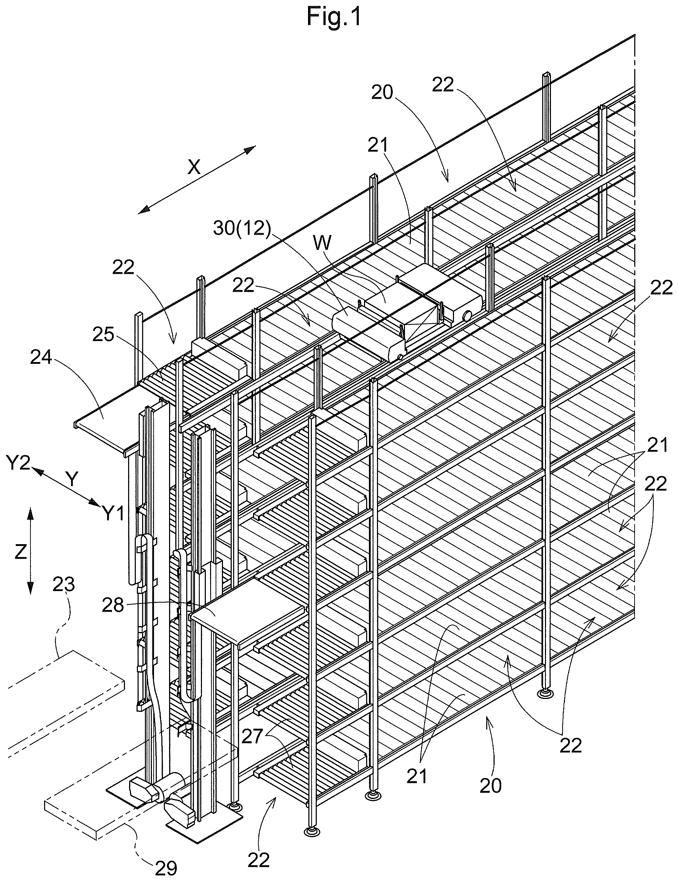

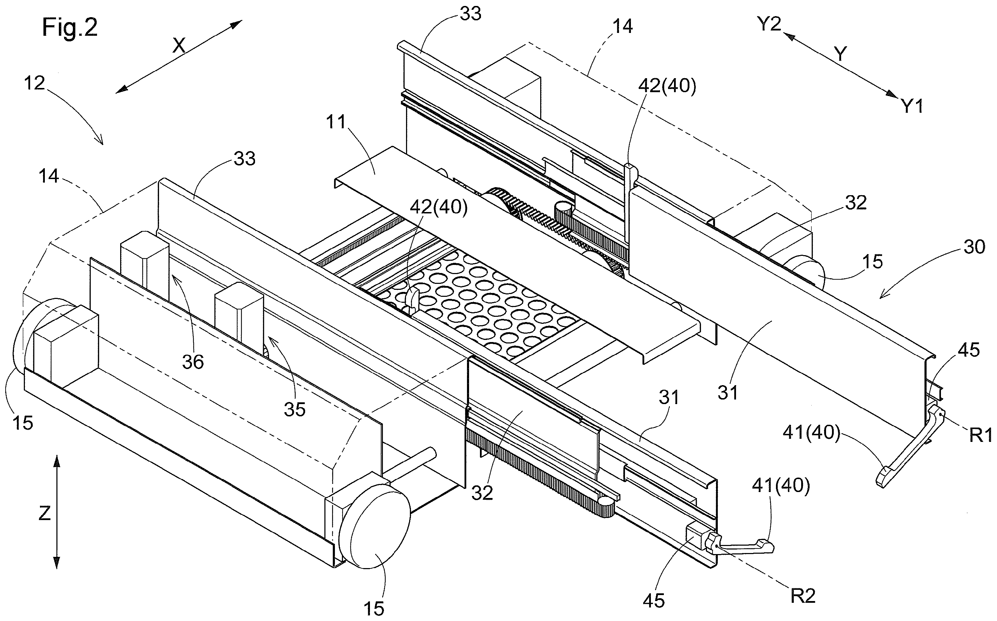

Fig. 1 is a perspective view illustrating an example of an article transport facility 10 according to the present embodiment. Fig. 2 is a perspective view illustrating an example of a transfer device 30. The article transport facility 10 includes a support 11 configured to support an article W, and the transfer device 30 configured to perform a transfer operation to move the article W along a transfer direction Y between the support 11 and a transfer target area 22. In the example illustrated in Fig. 1, the article transport facility 10 is an automated warehouse including an article transport vehicle 12 configured to travel along a storage section at each level in a storage shelf including storage sections arranged at a plurality of levels in a top-bottom direction Z. As illustrated in Fig. 2, the support 11 and the transfer device 30 are provided for the article transport vehicle 12. The article transport vehicle 12 further includes a vehicle body 14 and a travel device 15 configured to cause the vehicle body 14 to travel on a transport path. The support 11 is a portion provided for the vehicle body 14 to support the article W.

As illustrated in Fig. 1, in the present embodiment, the article transport facility 10 includes an article storage shelf 20 including a plurality of transfer target areas 22. Here, a width direction X is a direction perpendicular to the transfer direction Y in a top-bottom view along the top-bottom direction Z. A first side Y1 in the transfer direction Y is one side in the transfer direction Y, and a second side Y2 in the transfer direction Y is a side reverse to the first side Y1 in the transfer direction Y.

In the present embodiment, a pair of article storage shelves 20 is provided to face each other across a travel path on which the article transport vehicle 12 travels. The pair of article storage shelves 20 each include shelf boards 21 arranged in the top-bottom direction Z, and the transfer target area 22 to store the article W is on the shelf board 21. In the present embodiment, the transfer target area 22 indicates a storage section of the article storage shelf 20, and a transfer conveyor (an inbound intermediate conveyor 25 and an outbound intermediate conveyor 27) at each level in the article storage shelf 20. In the present embodiment, the article storage shelf 20 is a shelf having a so-called single deep structure including one storage section arranged in a shelf depth direction but may be a shelf having a so-called double deep structure including two storage sections arranged in the shelf depth direction. Three or more storage sections may be arranged in the shelf depth direction.

In the present embodiment, the article transport vehicle 12 is placed to correspond to each of a plurality of shelf boards 21 arranged in the top-bottom direction Z. In the example illustrated in Fig. 1, the article transport facility 10 includes an inbound conveyor 23 and an outbound conveyor 29, an inbound lift device 24 and an outbound lift device 28 each of which is freely liftable and lowerable along the top-bottom direction Z, and the inbound intermediate conveyor 25 and the outbound intermediate conveyor 27 as transfer conveyors provided to correspond to each of the plurality of shelf boards 21 arranged in the top-bottom direction Z, in addition to the pair of article storage shelves 20 and a plurality of article transport vehicles 12.

In the article transport facility 10 according to the present embodiment, the inbound lift device 24 transports the article W transported from the inbound conveyor 23, to any of the plurality of inbound intermediate conveyors 25. Then, the article transport vehicle 12 at a level corresponding to the inbound intermediate conveyor 25 on which the article W is placed transports the article W onto the shelf board 21 at the level. In the article transport facility 10, the article transport vehicle 12 at a level corresponding to the shelf board 21 on which the article W is placed also transports the article W to the outbound intermediate conveyor 27 at the level. Then, the outbound lift device 28 transports the article W held by any of the plurality of outbound intermediate conveyors 27 to the outbound conveyor 29.

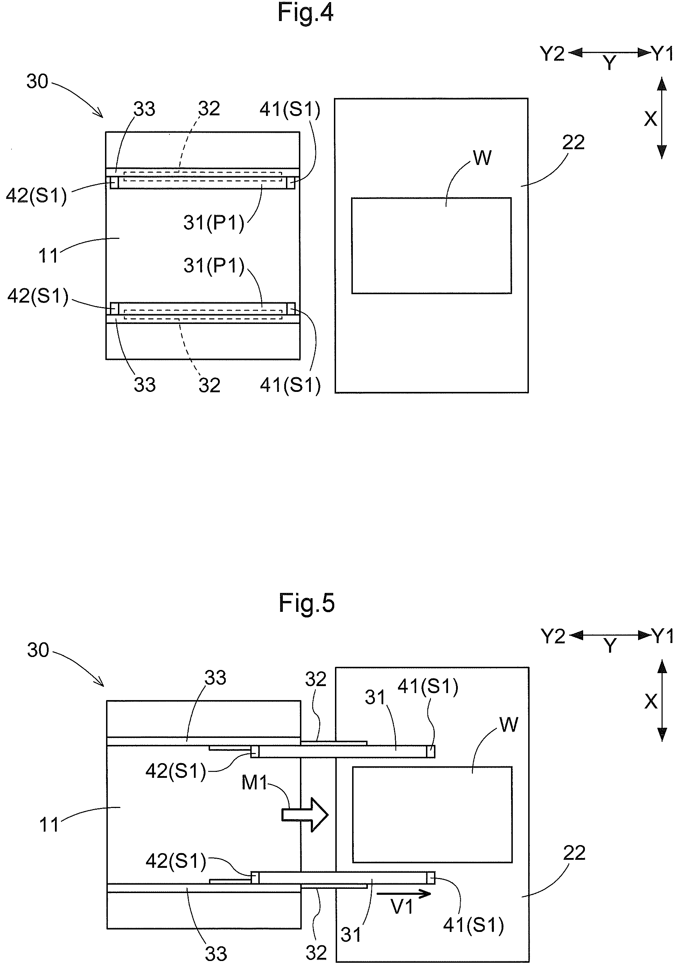

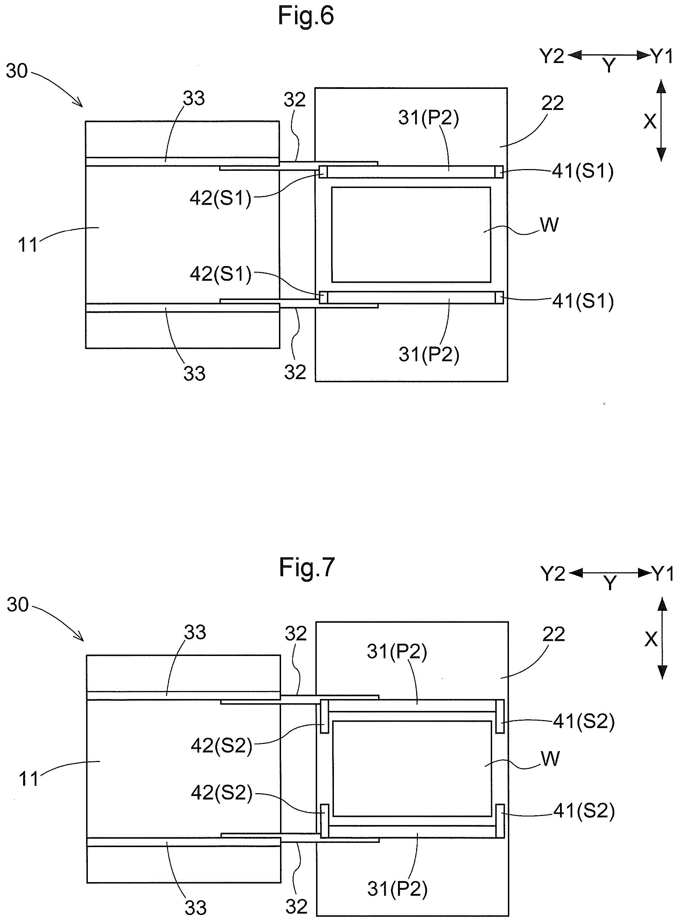

As illustrated in Fig. 2, the transfer device 30 includes a pair of movable members 31 which are respectively placed on the opposite sides of the article W in the width direction X and which are configured to advance and retract in the transfer direction Y. The transfer device 30 includes a driving device 35 configured to drive the pair of movable members 31 to advance and retract. In the present embodiment, the pair of movable members 31 advance and retract in the transfer direction Y between a reference position P1 (see Fig. 4) corresponding to the support 11 and a projection target position P2 (see Fig. 6) corresponding to the transfer target area 22. In the example illustrated herein, the pair of movable members 31 are supported by a pair of link-up members 32 in such a manner as to be movable along the transfer direction Y. The pair of link-up members 32 are supported by a pair of base members 33 in such a manner as to be movable along the transfer direction Y. In the present embodiment, the reference position P1 corresponding to the support 11 is a position at which the movable members 31 can hold the article W placed on the support 11. The projection target position P2 corresponding to the transfer target area 22 is a position at which the movable members 31 can hold the article W placed on the transfer target area 22.

In the present embodiment, the transfer device 30 includes a distance change device 36 configured to change the distance between the pair of movable members 31 in the width direction X. Hereby, the transfer device 30 can transfer various types of articles W different in size in the width direction X.

In the present embodiment, the transfer device 30 also includes hooks 40 supported by each of the pair of movable members 31 and configured to be changed in posture between a retracting posture S1 (see Fig. 6) and a projecting posture S2 (see Fig. 7) by advancing or retracting in the width direction X relative to their corresponding movable member 31. In the retracting posture S1, the hooks 40 provided as a pair are placed at respective positions where they do not overlap with the article W as viewed from the transfer direction, and in the projecting posture S2, the hooks 40 are placed at respective positions where they overlap with the article W in a transferdirection view along the transfer direction Y. The transfer device 30 also includes hook posture change devices 45 each configured to change the posture of a corresponding hook 40 between the retracting posture S1 and the projecting posture S2. In the example illustrated in Fig. 2, the hook posture change devices 45 are motors each configured to swing a corresponding hook 40 around a corresponding one of an axial center R1 and an axial center R2 along the transfer direction Y.

In the present embodiment, the pair of movable members 31 hold the article W in response to the hooks 40 being changed to the projecting posture S2 to lock the article W. In the example illustrated herein, the hooks 40 are provided at the opposite ends of the movable member 31 in the transfer direction Y. In the following description, a first hook 41 is a hook 40 on the first side Y1 in the transfer direction Y, and a second hook 42 is a hook 40 on the second side Y2 in the transfer direction Y.

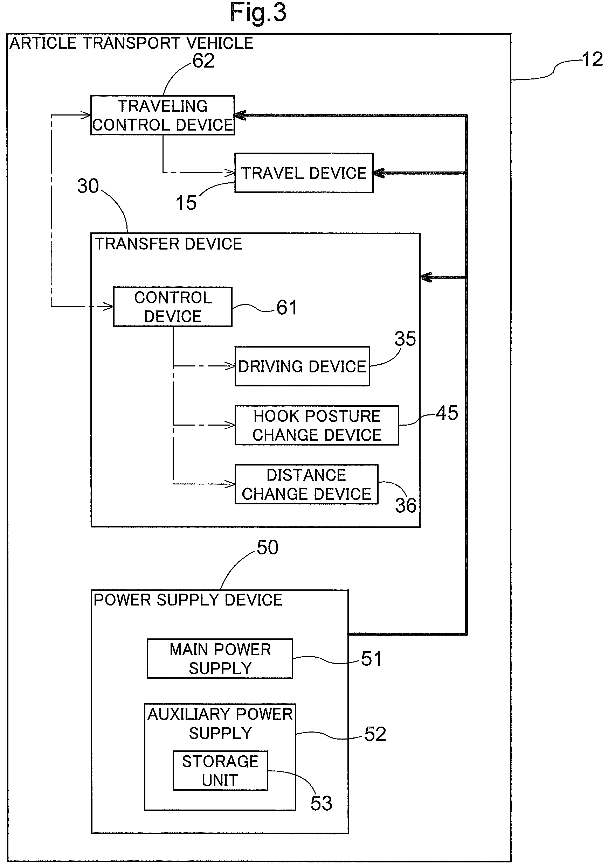

Fig. 3 is a block diagram illustrating a control of the transfer device 30 and a configuration related to power supply. In the present embodiment, the article transport facility 10 includes a power supply device 50 configured to supply electric power to the transfer device 30. The power supply device 50 includes a main power supply 51 configured to receive electric power from a commercial power supply and supply the electric power to the transfer device 30, and an auxiliary power supply 52 configured to temporarily supply electric power to the transfer device 30 in case of stop of power supply from the main power supply 51 to the transfer device 30. In the present embodiment, the main power supply 51 and the auxiliary power supply 52 are configured to supply electric power to every section of the article transport vehicle 12, including the transfer device 30. In the example illustrated in Fig. 3, the main power supply 51 and the auxiliary power supply 52 also supply electric power to the travel device 15 and a traveling control device 62 configured to control the travel device 15, in addition to the transfer device 30. In the present example, the main power supply 51 and the auxiliary power supply 52 are provided for the article transport vehicle 12. For example, the main power supply 51 can be a power supply unit (PSU) provided for the article transport vehicle 12, a power reception device provided for the article transport vehicle 12 in such a manner as to receive electric power from a feeder cable by contact or contactlessly which feeder cable is placed along the path of the article transport vehicle 12, or the like.

In the present embodiment, the auxiliary power supply 52 includes a power storage unit 53 configured to store electric power from the commercial power supply. The power storage unit 53 stores an amount of electric power which amount is equal to or more than a necessary amount of electric power that allows the transfer device 30 to move the heaviest article W among various types of articles W from the transfer target area 22 to the support 11. Hereby, even in a case where power supply from the main power supply 51 to the transfer device 30 stops, it is possible to secure the amount of electric power that allows the transfer device 30 to perform a necessary operation. In the present embodiment, the power storage unit 53 is provided for each of the plurality of article transport vehicles 12. The power storage unit 53 usable herein is a battery, a capacitor, or the like.

In the present embodiment, since the power storage unit 53 is provided for each of the plurality of article transport vehicles 12, one power storage unit 53 supplies electric power to one transfer device 30. In this case, it is preferable that the amount of electric power to be stored in the power storage unit 53 be equal to or more than the amount of electric power that allows one transfer device 30 to perform an operation using more electric power on the article W once, out of a scooping-up retraction operation M2 (described later) and an unloading projection operation M3 (described later). Note that, in a case where the auxiliary power supply 52 is provided for a fixedequipment side and one auxiliary power supply 52 supplies electric power to a plurality of transfer devices 30, it is preferable that the amount of electric power to be stored in the power storage unit 53 be equal to or more than the amount of electric power that allows all the plurality of transfer devices 30 to perform an operation using more electric power on their corresponding articles W once, out of the scooping-up retraction operation M2 and the unloading projection operation M3. Note that the amount of electric power to be stored in the power storage unit 53 may be equal to or more than the amount of electric power that can complete a power-outage first unloading operation M3a (described later) once.

In the present embodiment, the article transport facility 10 includes a control device 61 configured to control the driving device 35 of the transfer device 30. In the present embodiment, the control device 61 includes an arithmetic processing unit such as a CPU (Central Processing Unit), and a main storage device such as a RAM (Random Access Memory or a ROM (Read Only Memory) to which the arithmetic processing unit can refer. Each function of the control device 61 is implemented in collaboration of hardware included in the control device 61 and a program executed on hardware such as the arithmetic processing unit. More specifically, each function of the control device 61 is implemented in response to the control device 61 executing a program stored in a storage device (the main storage device, a storage unit provided separately, or the like). In other words, a program (for example, a transport control program) to cause a computer to implement each function of the control device 61 is stored in a storage device to which the computer can refer. This program is provided by a storage medium or provided via a communication network, for example. The program thus provided is stored in the storage device to which the computer can refer. In the present embodiment, the control device 61 (more specifically, the arithmetic processing unit included in the control device 61) functions as the "computer." The control device 61 may be a host control device installed in a control facility (not illustrated). In a case where the control device 61 includes a plurality of pieces of hardware separated from each other in such a manner as to be communicable with each other, some pieces of hardware may be provided for the transfer device 30, and remaining pieces of hardware may be installed in the control facility (not illustrated). In the example illustrated in Fig. 3, the control device 61 is configured to control the distance change device 36. The control device 61 is also configured to control the hook posture change devices 45. The traveling control device 62 controls the travel device 15 to cause the article transport vehicle 12 to travel.

In the present embodiment, in a case where the article W in the transfer target area 22 is to be moved to the support 11, the control device 61 performs a scooping-up projection operation M1 to project the pair of movable members 31 from the reference position P1 to the projection target position P2. Then, the control device 61 performs the scooping-up retraction operation M2 to retract the pair of movable members 31 holding the article W from the projection target position P2 to the reference position P1. The following describes an example of controls by the control device 61 as for the scooping-up projection operation M1 and the scooping-up retraction operation M2 with reference to Figs. 4 to 9.

Fig. 4 is a schematic top view of the transfer device 30 before the transfer device 30 starts the scooping-up projection operation M1. In Fig. 4, the article W is placed on the transfer target area 22. The pair of movable members 31 are at the reference position P1, and the first hooks 41 and the second hooks 42 have the retracting posture S1.

Fig. 5 is a view illustrating the transfer device 30 in the middle of the scooping-up projection operation M1. In Fig. 5, the pair of movable members 31 are in the middle of projecting from the reference position P1 to the projection target position P2, and the first hooks 41 and the second hooks 42 have the retracting posture S1.

Fig. 6 is a view illustrating the pair of movable members 31 being at the projection target position P2. In Fig. 6, the first hooks 41 and the second hooks 42 have the retracting posture S1.

Fig. 7 is a view illustrating the transfer device 30 that has completed the scooping-up projection operation M1. In Fig. 7, the pair of movable members 31 are at the projection target position P2, and the first hook 41 and the second hook 42 have the projecting posture S2. In the present embodiment, in response to the first hooks 41 and the second hooks 42 being changed from the retracting posture S1 to the projecting posture S2, the scooping-up projection operation M1 is completed, and the scooping-up retraction operation M2 starts.

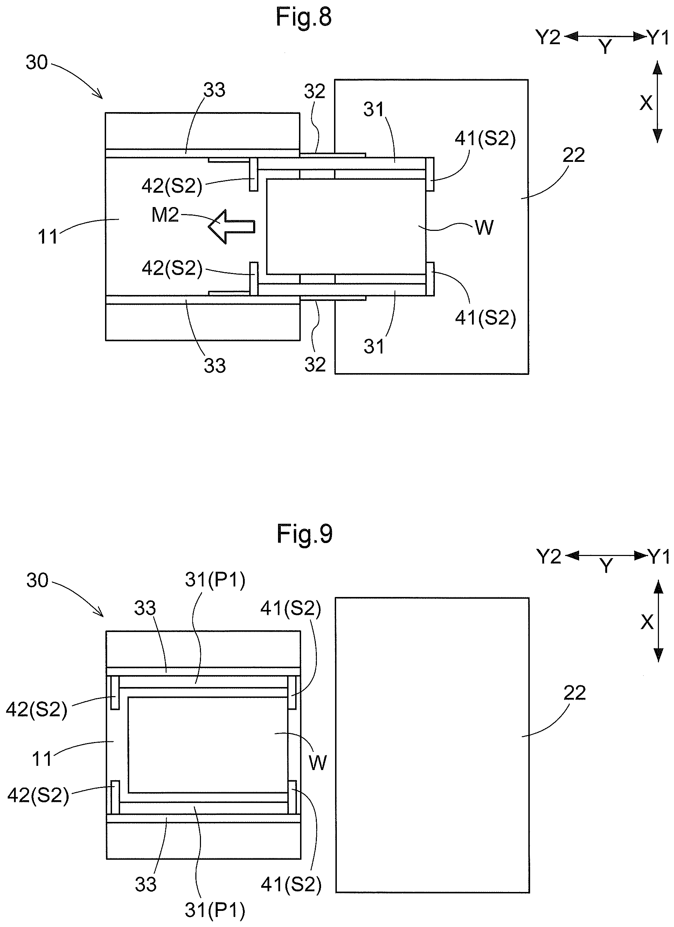

Fig. 8 is a view illustrating the transfer device 30 in the middle of the scooping-up retraction operation M2. In Fig. 8, the pair of movable members 31 holding the article W are in the middle of retracting from the projection target position P2 to the reference position P1, and the first hooks 41 and the second hooks 42 have the projecting posture S2.

Fig. 9 is a view illustrating the transfer device 30 that has completed the scooping-up retraction operation M2. In Fig. 9, the article W is placed on the support 11. The first hooks 41 and the second hooks 42 have the retracting posture S1.

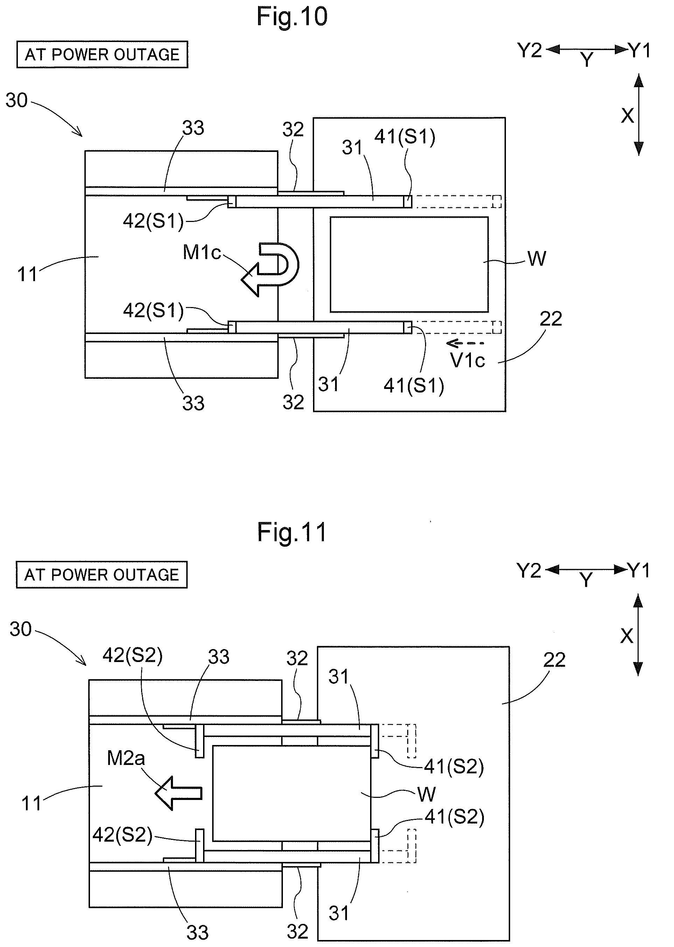

Fig. 10 is a view illustrating a power-outage scooping-up discontinuance operation M1c by the transfer device 30. In a case where the transfer device 30 is in the middle of the scooping-up projection operation M1 to move the article W in the transfer target area 22 to the support 11 (for example, the state illustrated in Fig. 5) at the time when power supply from the main power supply 51 to the transfer device 30 stops, the control device 61 performs the power-outage scooping-up discontinuance operation M1c to retract the pair of movable members 31 to the reference position P1 with the pair of movable members 31 holding no article W after the pair of movable members 31 project to the projection target position P2, as illustrated in Fig. 10.

With this configuration, even in a case where power supply from the main power supply 51 to the transfer device 30 stops due to power outage of the commercial power supply, malfunction of the main power supply 51, or the like, for example, in the middle of the scooping-up projection operation M1, it is possible to reduce the possibility that the pair of movable members 31 stops with the pair of movable members 31 projecting toward the transfer target area 22. Accordingly, in a case where the main power supply 51 is restored, it is possible to reduce such a possibility that the transfer device 30 moves due to the article transport vehicle 12 traveling with the pair of movable member 31 projecting, and the transfer device 30 makes contact with other equipment. Besides, even in a case where the power-outage scooping-up discontinuance operation M1c is performed, the pair of movable members 31 can operate in the transfer direction Y in the same manner as an operation performed at normal time, thereby making it possible to simplify a control process by the control device 61. In addition, since the pair of movable members 31 retract to the reference position P1 without holding the article W in the power-outage scooping-up discontinuance operation M1c, it is possible to restrain power consumption of the auxiliary power supply 52.

In the present embodiment, in a case where power supply from the main power supply 51 to the transfer device 30 stops after the pair of movable members 31 project to the projection target position P2 due to the scooping-up projection operation M1 with the hooks 40 having the retracting posture S1 but before the hooks 40 starts posture change from the retracting posture S1 to the projecting posture S2, the control device 61 performs the power-outage scooping-up discontinuance operation M1c. In this case, even after the pair of movable members 31 project to the projection target position P2, when the hooks 40 have not started posture change to the projecting posture S2, the power-outage scooping-up discontinuance operation M1c is performed. Accordingly, it is possible to avoid the hooks 40 from performing a wasteful operation, thereby making it possible to restrain power consumption of the auxiliary power supply 52. In the example illustrated herein, in a case where power supply from the main power supply 51 to the transfer device 30 stops in the states illustrated in Figs. 5, 6, the control device 61 performs the power-outage scooping-up discontinuance operation M1c.

In the present embodiment, the control device 61 sets a traveling speed V1c during the power-outage scooping-up discontinuance operation M1c to be lower than a reference traveling speed V1. The traveling speed V1c is a traveling speed of the pair of movable members 31 retracting from the projection target position P2 to the reference position P1 during the power-outage scooping-up discontinuance operation M1c, and the reference traveling speed V1 is a traveling speed of the pair of movable members 31 projecting from the reference position P1 to the projection target position P2. The traveling speed V1c is set to a speed equal to or more than 30% of the reference traveling speed V1 but equal to or less than 60% of the reference traveling speed V1, for example.

Fig. 11 is a view illustrating a power-outage scooping-up continuance operation M2a by the transfer device 30. In the present embodiment, in a case where the transfer device 30 is in the middle of the scooping-up retraction operation M2 to move the article W in the transfer target area 22 to the support 11 (for example, the state illustrated in Fig. 8) at the time when power supply from the main power supply 51 to the transfer device 30 stops, the control device 61 performs the power-outage scooping-up continuance operation M2a to retract the pair of movable members 31 to the reference position P1 with the pair of movable members 31 holding the article W, as illustrated in Fig. 11. In a case where power supply from the main power supply 51 to the transfer device 30 stops in the middle of the scooping-up retraction operation M2 as such, the scooping-up retraction operation M2 on the pair of movable members 31 already holding the article W is continued. Accordingly, it is possible to complete the scooping-up retraction operation M2 to move the article W to the support 11 and to avoid the pair of movable members 31 from stopping with the pair of movable members 31 projecting toward the transfer target area 22.

In the present embodiment, in a case where power supply from the main power supply 51 to the transfer device 30 stops after the hooks 40 start posture change from the retracting posture S1 to the projecting posture S2, the control device 61 performs the power-outage scooping-up continuance operation M2a. That is, after the posture change of the hooks 40 to the projecting posture S2 is started, the power-outage scooping-up continuance operation M2a is performed. Accordingly, it is not necessary to perform a control to return, to the retracting posture S1 again, the hooks 40 having started posture change to the projecting posture S2, thereby making it possible to simplify a control process by the control device 61. In the example illustrated herein, in the states illustrated in Figs. 7, 8, in a case where power supply from the main power supply 51 to the transfer device 30 stops, the control device 61 performs the power-outage scooping-up continuance operation M2a.

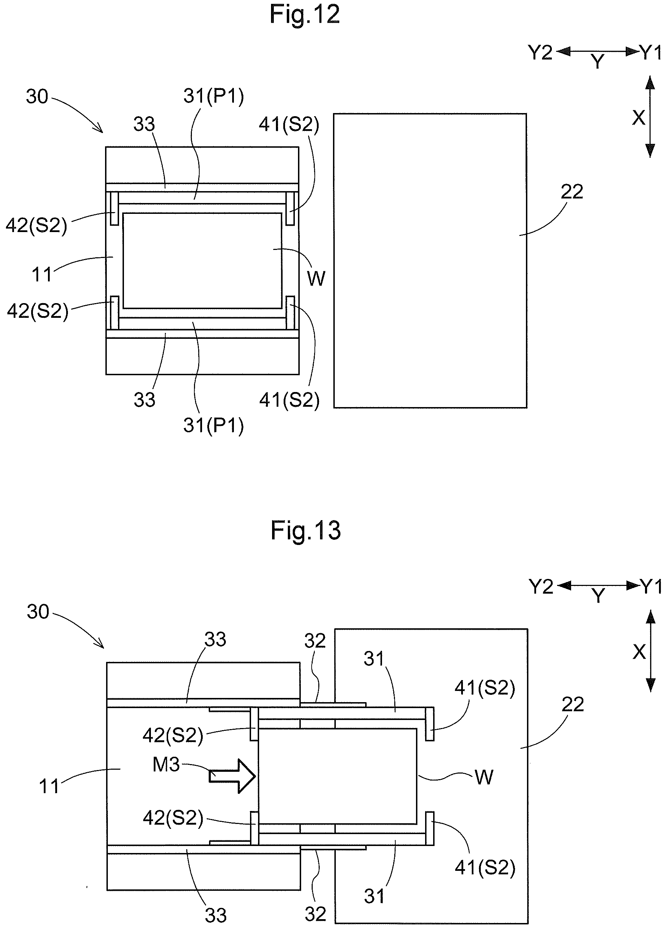

In the present embodiment, the control device 61 performs an unloading projection operation M3 to project the pair of movable members 31 holding the article W from the reference position P1 to the projection target position P2 to move the article W on the support 11 to the transfer target area 22. Then, after the control device 61 projects the pair of movable members 31 holding the article W to the projection target position P2, the control device 61 performs an unloading retraction operation M4 to retract the pair of movable members 31 holding no article W from the projection target position P2 to the reference position P1. The following describes an example of controls by the control device 61 as for the unloading projection operation M3 and the unloading retraction operation M4 with reference to Figs. 12 to 16.

Fig. 12 is a schematic top view of the transfer device 30 before the transfer device 30 starts the unloading projection operation M3. In Fig. 12, the article W is placed on the support 11. The pair of movable members 31 are at the reference position P1, and the first hooks 41 and the second hooks 42 have the projecting posture S2.

Fig. 13 is a view illustrating the transfer device 30 in the middle of the unloading projection operation M3. In Fig. 13, the pair of movable members 31 are in the middle of projecting from the reference position P1 to the projection target position P2, and the first hooks 41 and the second hooks 42 have the projecting posture S2.

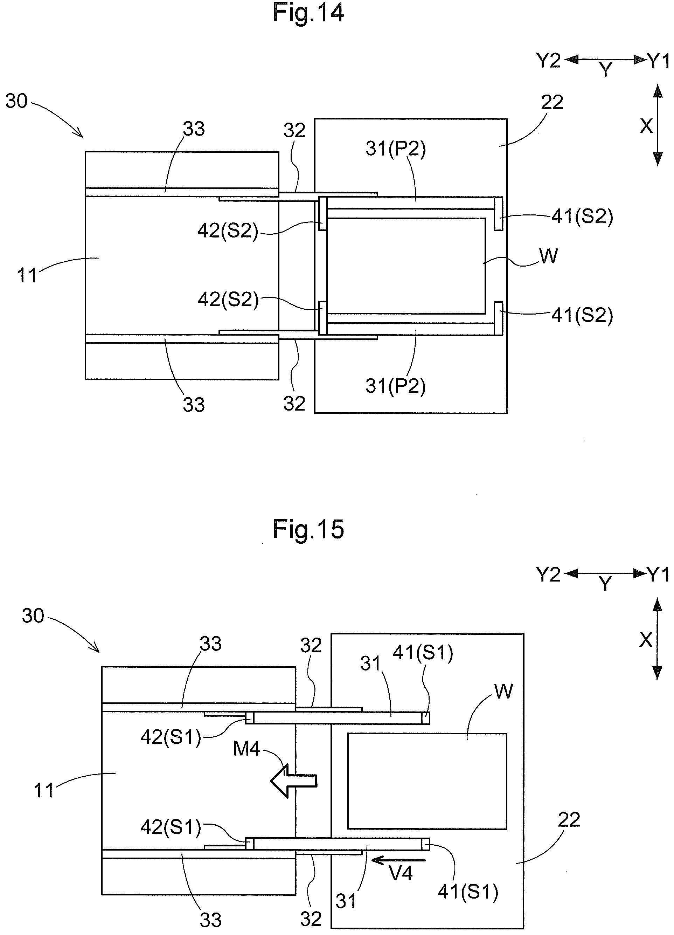

Fig. 14 is a view illustrating the transfer device 30 with the pair of movable members 31 being at the projection target position P2. In Fig. 14, the article W is placed on the support 11. The first hooks 41 and the second hooks 42 have the projecting posture S2. In the present embodiment, in response to the first hooks 41 and the second hooks 42 being changed from the projecting posture S2 to the retracting posture S1, the unloading projection operation M3 is completed, and the unloading retraction operation M4 starts.

Fig. 15 is a view illustrating the transfer device 30 in the middle of the unloading retraction operation M4. In Fig. 15, the pair of movable members 31 holding the article W is in the middle of retracting from the projection target position P2 to the reference position P1, and the first hooks 41 and the second hooks 42 have the retracting posture S1. In the present embodiment, a traveling speed V4 that is a traveling speed in the unloading retraction operation M4, i.e., a traveling speed of the pair of movable members 31 retracting from the projection target position P2 to the reference position P1 without holding the article W is the same speed as the reference traveling speed V1.

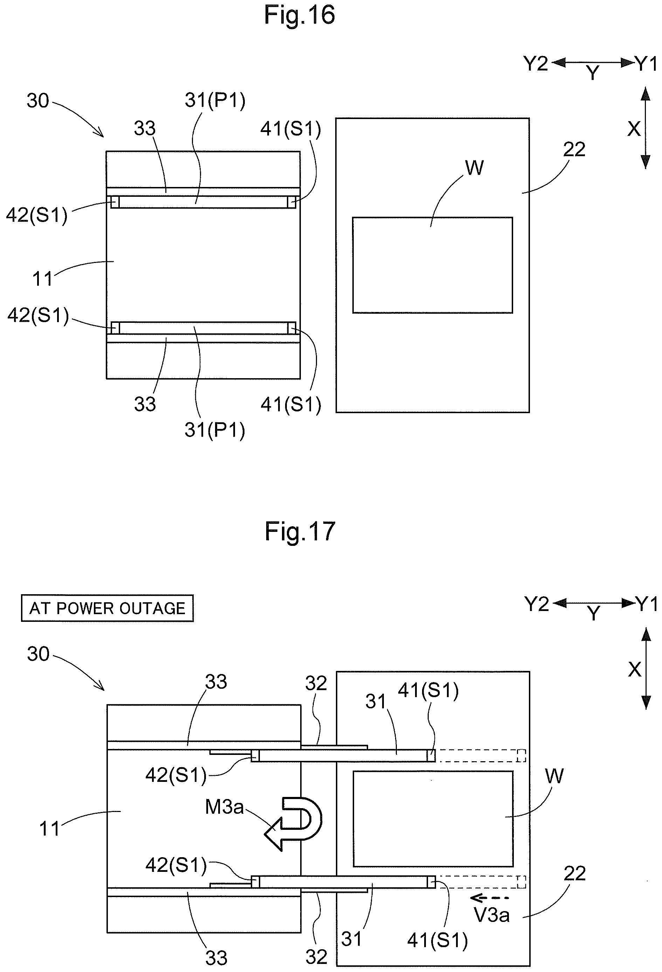

Fig. 16 is a view illustrating the transfer device 30 that has completed the unloading retraction operation M4. In Fig. 16, the pair of movable members 31 are at the reference position P1. The first hooks 41 and the second hooks 42 have the retracting posture S1.

Fig. 17 is a view to describe a power-outage first unloading operation M3a by the transfer device 30. In the present embodiment, in a case where the transfer device 30 is in the middle of the unloading projection operation M3 (for example, the state illustrated in Fig. 13) at the time when power supply from the main power supply 51 to the transfer device 30 stops, the control device 61 performs the power-outage first unloading operation M3a to project the pair of movable members 31 to the projection target position P2 with the pair of movable members 31 holding the article W, cause the pair of movable members 31 to release the article W, and retract the pair of movable members 31 to the reference position P1, as illustrated in Fig. 17.

In the present embodiment, the control device 61 sets a traveling speed V3a during the power-outage first unloading operation M3a to be lower than the reference traveling speed V1. The traveling speed V3a is a traveling speed of the pair of movable members 31 retracting from the projection target position P2 to the reference position P1 during the power-outage first unloading operation M3a, and the reference traveling speed V1 is a traveling speed of the pair of movable members 31 projecting from the reference position P1 to the projection target position P2. The traveling speed V3a is set to a speed equal to or more than 30% of the reference traveling speed V1 but equal to or less than 60% of the reference traveling speed V1, for example.

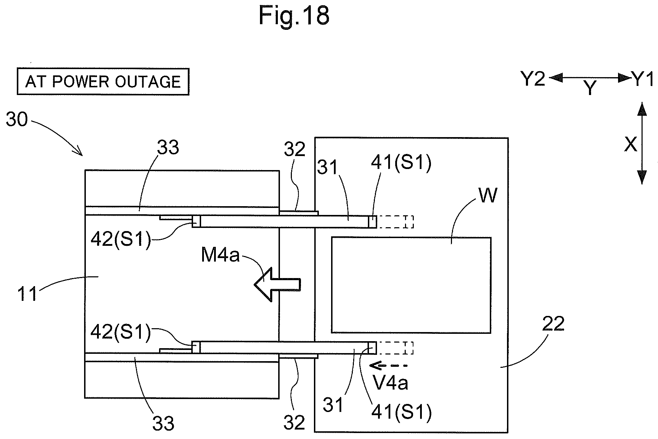

Fig. 18 is a view to describe a power-outage second unloading operation M4a by the transfer device 30. In the present embodiment, in a case where the transfer device 30 is in the middle of the unloading retraction operation M4 (for example, the state illustrated in Fig. 15) at the time when power supply from the main power supply 51 to the transfer device 30 stops, the control device 61 performs the power-outage second unloading operation M4a to just retract the pair of movable members 31 to the reference position P1, as illustrated in Fig. 18.

Then, in the present embodiment, the control device 61 sets a traveling speed V4a during the power-outage second unloading operation M4a to be lower than the reference traveling speed V1. The traveling speed V4a is a traveling speed of the pair of movable members 31 retracting from the projection target position P2 to the reference position P1 during the power-outage second unloading operation M4a, and the reference traveling speed V1 is a traveling speed of the pair of movable members 31 projecting from the reference position P1 to the projection target position P2. The traveling speed V4a is set to a speed equal to or more than 30% of the reference traveling speed V1 but equal to or less than 60% of the reference traveling speed V1, for example.

In the present embodiment, the hooks 40 have the retracting posture S1 during the power-outage scooping-up discontinuance operation M1c. Note that, in Figs. 4 to 18, the first hooks 41 and the second hooks 42 operate together but may not need to operate together.

For example, in a case where the transfer target area 22 is on the first side Y1 in the transfer direction Y, the first hooks 41 may be changed in posture appropriately, and the second hooks 42 may be kept in the retracting posture S1 during the scooping-up projection operation M1, the power-outage scooping-up discontinuance operation M1c, the scooping-up retraction operation M2, and the power-outage scooping-up continuance operation M2a. In the meantime, the second hooks 42 may be changed in posture appropriately, and the first hooks 41 may be kept in the retracting posture S1 during the unloading projection operation M3, the power-outage first unloading operation M3a, the unloading retraction operation M4, and the power-outage second unloading operation M4a.

For example, in a case where the transfer target area 22 is on the second side Y2 in the transfer direction Y, the second hooks 42 may be changed in posture appropriately, and the first hooks 41 may be kept in the retracting posture S1 during the scooping-up projection operation M1, the power-outage scooping-up discontinuance operation M1c, the scooping-up retraction operation M2, and the power-outage scooping-up continuance operation M2a. In the meantime, the first hooks 41 may be changed in posture appropriately, and the second hooks 42 may be kept in the retracting posture S1 during the unloading projection operation M3, the power-outage first unloading operation M3a, the unloading retraction operation M4, and the power-outage second unloading operation M4a.

### [Other Embodiments]

Next will be described other embodiments of the article transport facility 10.
(1) The above embodiment has described, as an example, the configuration in which the article transport facility 10 is a shuttle rack, and the transfer device 30 is provided for the article transport vehicle 12 including the vehicle body 14 and the support 11. However, the present invention is not limited to such an example, and the article transport facility 10 may be an automated warehouse including a stacker crane, and the transfer device 30 may be the stacker crane, for example. Alternatively, the transfer device 30 may be a fixed transfer device that is fixed so as not to move to a floor, a shelf, or the like. In addition, both the support 11 and the transfer target area 22 may be equipment such as a shelf or a conveyor provided outside the transfer device 30.
(2) The above embodiment has described, as an example, the configuration in which the control device 61 provided for the transfer device 30 controls the driving device 35, the distance change device 36, and the hook posture change device 45. However, the present invention is not limited to such an example, and the transfer device 30 may not include the distance change device 36 and the hook posture change device 45, for example. For example, the control device 61 provided for the transfer device 30 may control the driving device 35, and other control devices provided outside the transfer device 30 may control the distance change device 36 and the hook posture change device 45.
(3) The above embodiment has described, as an example, the configuration in which respective pairs of hooks 40 swing around the axial center R1 and the axial center R2, respectively, and the pair of movable members 31 hold the article W in response to the hooks 40 being changed to the projecting posture S2 to lock the article W. However, the present invention is not limited to such an example, and no hook 40 may not be provided, and the article W may be held in such a manner that the pair of movable members 31 sandwich the article W in the width direction X, or the article W may be held by other holding mechanisms provided for the pair of movable members 31, for example. Instead of the pair of hooks 40 swinging, the pair of hooks 40 may be configured to move linearly in the width direction X.
(4) The above embodiment has described, as an example, the configuration in which the main power supply 51 and the auxiliary power supply 52 are provided for the article transport vehicle 12. However, the present invention is not limited to such an example, and the main power supply 51 and the auxiliary power supply 52 may be provided outside the article transport vehicle 12. For example, the main power supply 51 and the auxiliary power supply 52 may be provided on fixed equipment such as the article storage shelf 20 in the article transport facility 10. In this case, the article transport vehicle 12 may receive electric power by contact or contactlessly from a feeder cable provided along the path of the article transport vehicle 12, for example. In such a case, one emergency generator for the whole article transport facility 10 may be provided as the auxiliary power supply 52.
(5) The above embodiment has described, as an example, the configuration in which the traveling speed V1c, the traveling speed V3a, and the traveling speed V4a are speeds lower than the reference traveling speed V1. However, the present invention is not limited to such an example, and the reference traveling speed V1, the traveling speed V1c, the traveling speed V3a, and the traveling speed V4a may be the same speed. Alternatively, the traveling speed V1c, the traveling speed V3a, and the traveling speed V4a may be the same speed or may be different speeds.
(6) The above embodiment has described, as an example, the configuration in which the traveling speed V4 is the same speed as the reference traveling speed V1. However, the present invention is not limited to such an example, and the traveling speed V4 and the reference traveling speed V1 may be different speeds, for example. In this case, the traveling speed V1c, the traveling speed V3a, and the traveling speed V4a may be set to be equal to or more than 30% of the traveling speed V4 but equal to or less than 60% of the traveling speed V4.
(7) The above embodiment has described, as an example, the configuration in which the control device 61 performs the power-outage scooping-up discontinuance operation M1c, the power-outage scooping-up continuance operation M2a, the power-outage first unloading operation M3a, and the power-outage second unloading operation M4a as an operation at power outage. However, the present invention is not limited to such an example, and the control device 61 may be configured not to perform the power-outage scooping-up continuance operation M2a, for example. Alternatively, the control device 61 may be configured not to perform at least either the power-outage first unloading operation M3a or the power-outage second unloading operation M4a.
(8) Note that the configuration disclosed in the above embodiment can be applied in combination with the configurations disclosed in other embodiments as long as no inconsistency occurs. In terms of other configurations, the embodiment disclosed in the present specification is also just an example in all respects. Accordingly, various modifications can be made appropriately as far as it does not deviate from the scope of this disclosure.

### [Overview of Embodiment]

The following describes the article transport facility described above.

An article transport facility according to this disclosure is an article transport facility including: a support configured to support an article; a transfer device configured to perform a transfer operation to move the article along a transfer direction between the support and a transfer target area; and a power supply device configured to supply electric power to the transfer device. The transfer device includes: a pair of movable members disposed on respective opposite sides across the article in a width direction and which are configured to advance and retract in the transfer direction, the width direction being a direction perpendicular to the transfer direction as viewed vertically; a driving device configured to advance and retract the pair of movable members; and a control device configured to control the driving device. The power supply device includes: a main power supply configured to receive electric power from a commercial power supply and supply the electric power to the transfer device; and an auxiliary power supply configured to temporarily supply electric power to the transfer device in case of stop of power supply from the main power supply to the transfer device. In a case where the transfer device is performing a scooping-up projection operation to project the pair of movable members from a reference position corresponding to the support to a projection target position corresponding to the transfer target area to move the article in the transfer target area to the support at the stop of power supply from the main power supply to the transfer device, the control device performs a power-outage scooping-up discontinuance operation to project the pair of movable members to the projection target position and then retract the pair of movable members to the reference position with the pair of movable members holding no article.

With this configuration, even in a case where power supply from the main power supply to the transfer device stops due to power outage of a commercial power supply, malfunction of the main power supply, or the like in the middle of the scooping-up projection operation, for example, it is possible to reduce the possibility that the pair of movable members stop with the pair of movable members projecting toward the transfer target area. Accordingly, it is possible to reduce such a possibility that the transfer device moves with the pair of movable member projecting in response to restoration of the main power supply, and the transfer device makes contact with other equipment, for example. Besides, even in a case where the power-outage scooping-up discontinuance operation is performed, the pair of movable members can operate in the transfer direction in the same manner as an operation performed at normal time, thereby making it possible to simplify a control process by the control device. **In** addition, since the pair of movable members retract to the reference position without holding the article in the power-outage scooping-up discontinuance operation, it is possible to restrain power consumption of the auxiliary power supply.

As one aspect, during the power-outage scooping-up discontinuance operation, the control device may set a traveling speed of the pair of movable members retracting from the projection target position to the reference position to be lower than a traveling speed of the pair of movable members projecting from the reference position to the projection target position.

With this configuration, it is possible to restrain a driving force of the driving device during the power-outage scooping-up discontinuance operation, thereby making it possible to restrain power consumption of the auxiliary power supply at power outage.

As one aspect, in a case where the transfer device is performing a scooping-up retraction operation to retract the pair of movable members holding the article from the projection target position to the reference position to move the article in the transfer target area to the support at the stop of power supply from the main power supply to the transfer device, the control device may perform a power-outage scooping-up continuance operation to retract the pair of movable members to the reference position with the pair of movable members holding the article.

With this configuration, in a case where power supply from the main power supply to the transfer device stops in the middle of the scooping-up retraction operation, the scooping-up retraction operation on the pair of movable members already holding the article is continued. Accordingly, it is possible to complete the scooping-up retraction operation to move the article to the support and to avoid the pair of movable members from stopping with the pair of movable members projecting toward the transfer target area.

As one aspect, the transfer device may include a pair of hooks each held by a corresponding one of the pair of movable members and configured to be changed in posture between a projecting posture and a retracting posture by advancing or retracting in the width direction relative to a corresponding movable member. The pair of hooks may be at positions overlapping with the article as viewed in the transfer direction in the projecting posture and may be at positions not overlapping with the article as viewed in the transfer direction in the retracting posture. In a case where power supply from the main power supply to the transfer device stops after the pair of movable members project to the projection target position by the scooping-up projection operation with the hooks having the retracting posture but before the hooks start posture change from the retracting posture to the projecting posture, the control device may perform the power-outage scooping-up discontinuance operation, and in a case where power supply from the main power supply to the transfer device stops after the hooks start posture change from the retracting posture to the projecting posture, the control device may perform the power-outage scooping-up continuance operation..

With this configuration, even after the pair of movable members project to the projection target position, when the hooks have not started posture change to the projecting posture, the power-outage scooping-up discontinuance operation is performed. Accordingly, it is possible to avoid the hooks from performing a wasteful operation, thereby making it possible to restrain power consumption of the auxiliary power supply. In addition, in this configuration, after the posture change of the hooks to the projecting posture has been started, the power-outage scooping-up continuance operation is performed. Accordingly, it is not necessary to perform a control to return, to the retracting posture again, the hooks having started posture change to the projecting posture, thereby making it possible to simplify a control process by the control device.

As one aspect, in a case where the transfer device is performing an unloading projection operation to project the pair of movable members holding the article from the reference position to the projection target position to move the article on the support to the transfer target area at the stop of power supply from the main power supply to the transfer device, the control device may perform a power-outage first unloading operation to project the pair of movable members holding the article to the projection target position, cause the pair of movable members to release the article, and retract the pair of movable members to the reference position, and in a case where, at the stop of power supply from the main power supply to the transfer device, the transfer device is performing an unloading retraction operation to project the pair of movable members holding the article to the projection target position to move the article from the support to the transfer target area and then retract the pair of movable members holding no article from the projection target position to the reference position, the control device may perform a power-outage second unloading operation to continue the retraction of the pair of movable members to the reference position.

With this configuration, in a case where power supply from the main power supply to the transfer device stops during the unloading operation, the unloading operation on the pair of movable members is continued. Accordingly, it is possible to complete the unloading operation to move the article to the transfer target area and to avoid the pair of movable members from stopping with the pair of movable members projecting toward the transfer target area.

As one aspect, during the power-outage first unloading operation, the control device may set a traveling speed of the pair of movable members retracting from the projection target position to the reference position to be lower than a traveling speed of the pair of movable members projecting from the reference position to the projection target position.

With this configuration, it is possible to restrain a driving force of the driving device during the power-outage first unloading operation, thereby making it possible to restrain power consumption of the auxiliary power supply at power outage.

As one aspect, the auxiliary power supply may include a power storage unit configured to store electric power from the commercial power supply, and the power storage unit may store an amount of electric power which amount is equal to or more than a necessary amount of electric power that allows the transfer device to move a heaviest article from the transfer target area to the support.

With this configuration, even in a case where power supply from the main power supply to the transfer device stops, it is possible to secure the amount of electric power that allows the transfer device to perform a necessary operation.

### Description of Reference Numerals

10: article transport facility
11: support
22: transfer target area
30: transfer device
31: movable member
35: driving device
40: hook
50: power supply device
51: main power supply
52: auxiliary power supply
53: power storage unit
60: control device
P1: reference position
P2: projection target position
S1: retracting posture
S2: projecting posture
W: article

## Claims

1. An article transport facility, comprising:
a support configured to support an article;
a transfer device configured to perform a transfer operation to move the article along a transfer direction between the support and a transfer target area; and
a power supply device configured to supply electric power to the transfer device,
the transfer device including:
a pair of movable members disposed on respective opposite sides across the article in a width direction and which are configured to advance and retract in the transfer direction, the width direction being a direction perpendicular to the transfer direction as viewed vertically;
a driving device configured to advance and retract the pair of movable members; and
a control device configured to control the driving device,
the power supply device including:
a main power supply configured to receive electric power from a commercial power supply and supply the electric power to the transfer device, and
an auxiliary power supply configured to temporarily supply electric power to the transfer device in case of stop of power supply from the main power supply to the transfer device,
in a case where the transfer device is performing a scooping-up projection operation to project the pair of movable members from a reference position corresponding to the support to a projection target position corresponding to the transfer target area to move the article in the transfer target area to the support at the stop of power supply from the main power supply to the transfer device, the control device performing a power-outage scooping-up discontinuance operation to project the pair of movable members to the projection target position and then retract the pair of movable members to the reference position with the pair of movable members holding no article.

2. The article transport facility according to claim 1, wherein
during the power-outage scooping-up discontinuance operation, the control device sets a traveling speed of the pair of movable members retracting from the projection target position to the reference position to be lower than a traveling speed of the pair of movable members projecting from the reference position to the projection target position.

3. The article transport facility according to claim 1, wherein
in a case where the transfer device is performing a scooping-up retraction operation to retract the pair of movable members holding the article from the projection target position to the reference position to move the article in the transfer target area to the support at the stop of power supply from the main power supply to the transfer device, the control device performs a power-outage scooping-up continuance operation to retract the pair of movable members to the reference position with the pair of movable members holding the article.

4. The article transport facility according to claim 3, wherein
the transfer device includes a pair of hooks each held by a corresponding one of the pair of movable members and configured to be changed in posture between a projecting posture and a retracting posture by advancing or retracting in the width direction relative to a corresponding movable member,
the pair of hooks are at positions overlapping with the article as viewed in the transfer direction in the projecting posture and are at positions not overlapping with the article as viewed in the transfer direction in the retracting posture,
in a case where power supply from the main power supply to the transfer device stops after the pair of movable members project to the projection target position by the scooping-up projection operation with the hooks having the retracting posture but before the hooks start posture change from the retracting posture to the projecting posture, the control device performs the power-outage scooping-up discontinuance operation, and
in a case where power supply from the main power supply to the transfer device stops after the hooks start posture change from the retracting posture to the projecting posture, the control device performs the power-outage scooping-up continuance operation.

5. The article transport facility according to any one of claims 1 to 4, wherein
in a case where the transfer device is performing an unloading projection operation to project the pair of movable members holding the article from the reference position to the projection target position to move the article on the support to the transfer target area at the stop of power supply from the main power supply to the transfer device, the control device performs a power-outage first unloading operation to project the pair of movable members holding the article to the projection target position, cause the pair of movable members to release the article, and retract the pair of movable members to the reference position, and
in a case where, at the stop of power supply from the main power supply to the transfer device, the transfer device is performing an unloading retraction operation to project the pair of movable members holding the article to the projection target position to move the article from the support to the transfer target area and then retract the pair of movable members holding no article from the projection target position to the reference position, the control device performs a power-outage second unloading operation to continuing the retraction of the pair of movable members to the reference position.

6. The article transport facility according to claim 5, wherein
during the power-outage first unloading operation, the control device sets a traveling speed of the pair of movable members retracting from the projection target position to the reference position to be lower than a traveling speed of the pair of movable members projecting from the reference position to the projection target position.

7. The article transport facility according to any one of claims 1 to 4, wherein
the auxiliary power supply includes a power storage unit configured to store electric power from the commercial power supply, and
the power storage unit stores an amount of electric power which amount is equal to or more than a necessary amount of electric power that allows the transfer device to move a heaviest article from the transfer target area to the support.
